# FASCICULE DE BREVET EUROPEEN

(11) **EP 4 043 316 B1**
(45) Date de publication et mention de la délivrance du brevet: **05.06.2024**
(21) Numéro de dépôt: 22156175.6
(22) Date de dépôt: 10.02.2022
(51) Int. Cl.: B61J 3/12

(54) **DISPOSITIF DE DEPLACEMENT D'UNE CHARGE ROULANT SUR DES RAILS**
VORRICHTUNG ZUM BEWEGEN EINER AUF SCHIENEN ROLLENDEN LAST
DEVICE FOR MOVING A ROLLING LOAD ON RAILS

(30) Priorité: 12.02.2021 FR 2101370
(43) Date de publication de la demande: 17.08.2022
(73) Titulaire: Gillet Group, 52800 Nogent (FR)
(72) Inventeur: PETIT, Fabrice, 52250 ORCEVAUX (FR); DETOURBET, Antoine, 52200 JORQUENAY (FR)
(74) Mandataire: Oudin, Stéphane

(56) Documents cités:
- WO-A1-84/02119
- CH-A- 101 080
- CN-U- 206 552 051
- JP-A- 2014 080 076
- US-A- 4 125 029

## Description

### Domaine technique de l'invention

La présente invention concerne le domaine des dispositifs de déplacement de charges roulantes lourdes, et plus spécifiquement des dispositifs de déplacement de charges lourdes roulant sur des rails de voies ferrées.

### Etat de la technique

La plupart des sociétés de chemins de fer possèdent des charges roulantes du type, wagons, convoi de wagons ou encore locomotives qu'il est nécessaire de déplacer notamment dans leurs ateliers en vue de l'entretien, de la maintenance et de la réparation desdites charges roulantes.

Pour cela, il est connu d'utiliser des dispositifs de déplacement comprenant notamment un rouleau entraîné par un moteur et engagé contre la surface de roulement d'une des roues desdites charges roulantes de sorte à mettre en mouvement ces dernières.

Ainsi, la demande de brevet internationale WO 1984/002119 décrit un dispositif d'entraînement comportant un chariot transportable doté de deux cylindres de roulement et un cylindre d'entraînement actionné par un moteur de traction et disposé au-dessus desdits cylindres de roulement de sorte que, lorsque le dispositif d'entraînement est amené en contact avec la roue d'une charge roulante, un contact par friction est établi entre le cylindre d'entraînement et les cylindres de roulement, ce qui provoque le déplacement du chariot lors de la rotation du cylindre d'entraînement et, en même temps, le déplacement de la charge roulante par la rotation de sa roue entraînée par la rotation du cylindre d'entraînement. Le chariot possède en outre un manche dans lequel sont de préférence emboîtés les câbles, les gaines ou éléments similaires pour l'alimentation en énergie du moteur et qui possède des mécanismes de commande comme des commutateurs ou éléments similaires.

Ce type de dispositif d'entraînement est efficace mais présente l'inconvénient majeur de devoir être mise en place uniquement à l'un des extrémités de la charge roulante à déplacer, il ne pourra donc pas être mis en place entre les essieux de cette dernière. Par ailleurs, ce type de dispositif d'entraînement nécessite l'utilisation de câbles d'alimentation en énergie de grande longueur. Enfin, avec ce type de dispositif d'entraînement, une fois en mouvement, la charge roulante ne s'arrêtera pas à une position donnée, mais uniquement lorsque son énergie cinétique sera nulle.

D'autres types de dispositif d'entraînement sont décrits dans les demandes de brevet japonais JP 2014/080076 et américain US 4 125 029, mais ils présentent également un certains nombres d'inconvénients tels que, par exemple, un poids excessif, un manque d'autonomie, ou encore une mise en oeuvre difficile.

### Résumé de l'invention

Le but de la présente invention est donc de pallier les inconvénients précédemment cités et de proposer une alternative aux dispositifs d'entraînement de charge roulante connus, cette alternative étant autonome, compacte, facile à déplacer et à mettre en oeuvre par un seul opérateur quel que soit l'endroit de sa mise en oeuvre sur ladite charge roulante et permettant de stopper facilement cette dernière à une position donnée.

Conformément à l'invention, il est donc proposé un dispositif de déplacement d'une charge munie de roues et roulant sur des rails de voie ferrées, le dispositif de déplacement comprenant au moins :
- un motoréducteur dont l'axe de rotation de son arbre est horizontal,
- un rouleau d'entrainement fixé sur l'extrémité libre de l'arbre du motoréducteur et entrainé en rotation par ce dernier, ledit rouleau d'entraînement étant agencé pour venir en appui contre une des roues de la charge à déplacer,
- deux rouleaux d'appui agencés pour venir en appui sur le rail de la voie ferrée recevant ladite roue de la charge à déplacer et configurés pour être entraînés en rotation par adhérence par ledit rouleau d'entrainement,
- un bras solidaire par l'une de ses extrémités à l'arbre du motoréducteur et s'étendant horizontalement et perpendiculairement à l'axe de rotation dudit arbre, et
- un patin de freinage solidaire de l'extrémité libre dudit bras et agencé pour, d'une part, être disposé à proximité ladite roue de la charge à déplacer du côté opposé audit rouleau d'entrainement et, d'autre part, venir en appui sur ledit rail recevant ladite roue, ledit dispositif de déplacement étant remarquable en ce que le bras est monté pivotant sur l'arbre du motoréducteur autour de l'axe de rotation de ce dernier et en ce que le patin de freinage est monté pivotant à l'extrémité du bras associée autour d'un axe de rotation parallèle à l'axe de rotation de l'arbre du motoréducteur.

On comprend bien qu'avec cette configuration, on comprend bien que le dispositif de déplacement selon l'invention ne comporte qu'un seul ensemble motoréducteur - rouleaux d'entrainement et d'appui, ce qui rend le dispositif plus compact et moins lourd tout en permettant de stopper facilement la charge roulante à une position donnée.

Le bras est avantageusement réglable en longueur.

De manière préférée, le bras est monté pivotant sur l'arbre du motoréducteur autour de l'axe de rotation de ce dernier et en ce que le patin de freinage est monté pivotant à l'extrémité du bras associée autour d'un axe de rotation parallèle à l'axe de rotation de l'arbre du motoréducteur.

Cette configuration particulière permet de pouvoir disposer le patin de freinage d'un côté ou de l'autre de la roue de la charge roulante pour, si besoin, faciliter la mise en oeuvre du dispositif de déplacement d'une charge selon l'invention.

Le bras comporte avantageusement une articulation disposée du côté de l'extrémité solidaire de l'arbre du motoréducteur et permettant de faire passer ledit bras d'une position "déplié" dans laquelle il est entièrement rectiligne à une position "replié".

Le patin de freinage est de préférence un tronçon de cylindre de section transversale globalement triangulaire isocèle comportant une face inférieure horizontale agencée pour reposer sur le rail et deux faces inclinées agencées pour recevoir la roue de la charge.

Le patin de freinage est de manière avantageuse en élastomère.

Selon un mode de réalisation avantageux, le dispositif de déplacement comporte une plaque de guidage solidaire au moins des rouleaux d'appui du côté opposé au motoréducteur et s'étendant du côté opposé au rouleau d'entrainement au-delà desdits rouleaux d'appui, et une plaque de guidage solidaire du patin de freinage du côté opposé au motoréducteur et s'étendant du côté opposé au faces inclinées dudit patin de freinage au-delà de la face inférieure de ce dernier.

La plaque de guidage solidaire du patin de freinage est de préférence associée à une plaque de guidage escamotable solidaire du patin de freinage du côté du motoréducteur et pouvant ou non s'étendre au-delà de la face inférieure dudit patin de freinage 9.

Le dispositif de déplacement comporte un chariot contenant au moins en partie le motoréducteur, le rouleau d'entrainement, les deux rouleaux d'appui, le bras et le patin de freinage, ledit motoréducteur étant orienté pour que son arbre s'étendent au-delà de la face avant du chariot, ledit chariot étant muni, d'une part, d'au moins une première roue escamotable permettant de déplacer facilement sur un sol ledit dispositif de déplacement depuis son lieu de stockage jusqu'à son lieu d'utilisation et, d'autre part, d'au moins une deuxième roue remplaçant la ou les première(s) roue(s) pour déplacer ledit dispositif de déplacement, lorsque ce dernier est utilisé pour faire rouler une charge à déplacer.

Chaque deuxième roue est avantageusement réglable en hauteur et du type roue "jockey".

Ledit dispositif de déplacement comporte de préférence :
- un guidon solidaire de la partie arrière du chariot et réglable en hauteur et repliable pour une bonne ergonomie en toutes situations,
- un poste de pilotage avantageusement solidaire dudit guidon et muni de tous les éléments nécessaires à la commande du dispositif de déplacement, et
- un élément de stockage d'énergie du type batterie rechargeable pour alimenter notamment le motoréducteur.

### Brève description des figures

D'autres avantages et caractéristiques ressortiront mieux de la description qui va suivre d'un mode d'exécution de l'invention, en référence aux figures annexées sur lesquelles :
[Fig 1] est une vue en perspective avant d'un dispositif d'entraînement de charge roulante conforme à l'invention,
[Fig 2] est une vue en perspective arrière du dispositif d'entraînement de la figure 1,
[Fig 3] est une vue en perspective avant du dispositif d'entraînement conforme à l'invention en position replié,
[Fig 4] est une vue partielle de côté du dispositif d'entraînement de la figure 1 avec ses roues en position basse,
[Fig 5] est une vue partielle de côté du dispositif d'entraînement de la figure 1 avec ses roues en position relevée,
[Fig 6] est une vue partielle de la face avant du dispositif d'entraînement de la figure 1 mis en oeuvre sur une roue d'une charge roulante,
[Fig 7] est une vue de détail agrandie de la figure 6,
[Fig 8] est une vue de côté de la figure 7,
[Fig 9] est une vue partielle agrandie du dispositif d'entraînement de la figure 1.

### Description des modes de réalisation

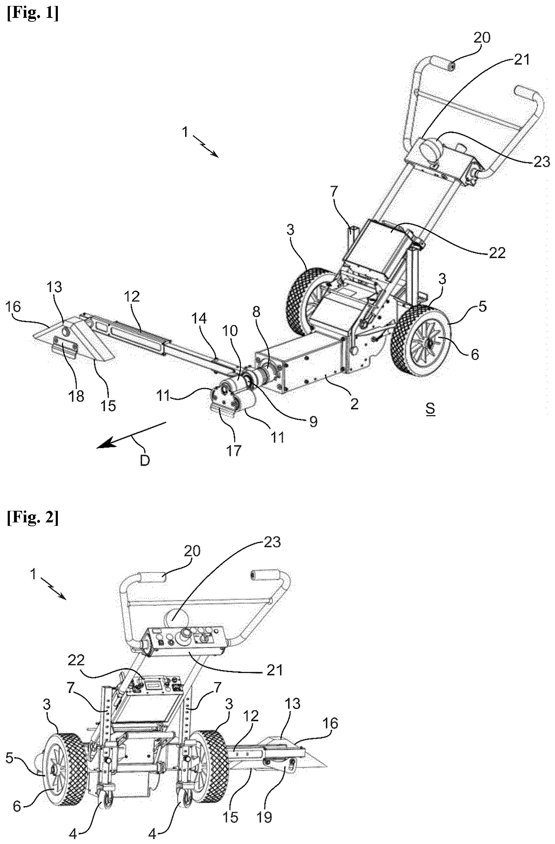

Sur les figures 1 à 8, on a représenté un dispositif de déplacement 1 d'une charge roulante, non représentée sur les figures, telle que, par exemple, des wagons, convois de wagons ou encore locomotives, et munie de roues R configurées pour rouler sur des rails V de voie ferrées.

Il va de soi qu'ici les rails V sont supposés horizontaux, mais qu'ils pourront également plus ou moins inclinés par rapport à l'horizontale, les termes : horizontal, horizontalement, vertical ou encore verticalement, seront alors à adapter.

En référence aux figures 1à 5, le dispositif de déplacement 1 selon l'invention comprend un chariot 2 muni, d'une part, d'au moins une première roue 3, avantageusement deux pour une raison évidente de stabilité, permettant de déplacer facilement sur un sol S ledit dispositif de déplacement 1 depuis son lieu de stockage jusqu'à son lieu d'utilisation et, d'autre part, d'au moins une deuxième roue 4, avantageusement deux pour une raison évidente de stabilité, remplaçant la ou les première(s) roue(s) 3 pour déplacer ledit dispositif de déplacement 1, lorsque ce dernier est utilisé pour faire rouler une charge à déplacer.

Pour des raisons de confort de mouvement, chaque première roue 3 comporte de préférence un pneumatique 5 monté sur une jante 6 et est montée pivotante sur le chariot 2 autour d'un axe horizontal perpendiculaire au plan sagittal (plan vertical, orienté d'avant en arrière) dudit dispositif de déplacement 1.

On désigne ici par "avant" tout élément ou partie d'élément du dispositif de déplacement 1, selon l'invention, situé du côté de l'avant de ce dernier selon sa direction D de déplacement normale, représentée par la flèche sur la figure 1, et par "arrière" tout élément ou partie d'élément dudit dispositif de déplacement 1 situé du côté opposé.

Par ailleurs, pour permettre son remplacement par la ou les deuxième(s) roue(s) 4, chaque première roue 3 est avantageusement escamotable verticalement entre une position "basse" dans laquelle est en appui sur le sol S, la ou les deuxième(s) roue(s) 4 n'étant alors pas en contact avec ledit sol S, et une position "haute" dans laquelle n'est plus en contact avec le sol S, la ou les deuxième(s) roue(s) 4 étant alors en appui sur ledit sol S de sorte à permettre le déplacement du dispositif de déplacement 1 lorsqu'il est utilisé pour faire rouler une charge à déplacer.

En outre, on comprend bien, que pour adapter la position du dispositif de déplacement 1 par rapport aux dimensions de la charge à déplacer et/ou du rail V, la position de chaque deuxième roue 4 est avantageusement réglable en hauteur. Pour ce faire, chaque deuxième roue 4 est solidaire du chariot 2 par l'intermédiaire d'un profilé 7 vertical réglable en longueur. Par ailleurs, pour faciliter le déplacement du dispositif de déplacement 1, chaque deuxième roue 4 est avantageusement du type roue "jockey" et pivote autour d'un axe horizontal, mais peut également pivoter autour d'un axe vertical.

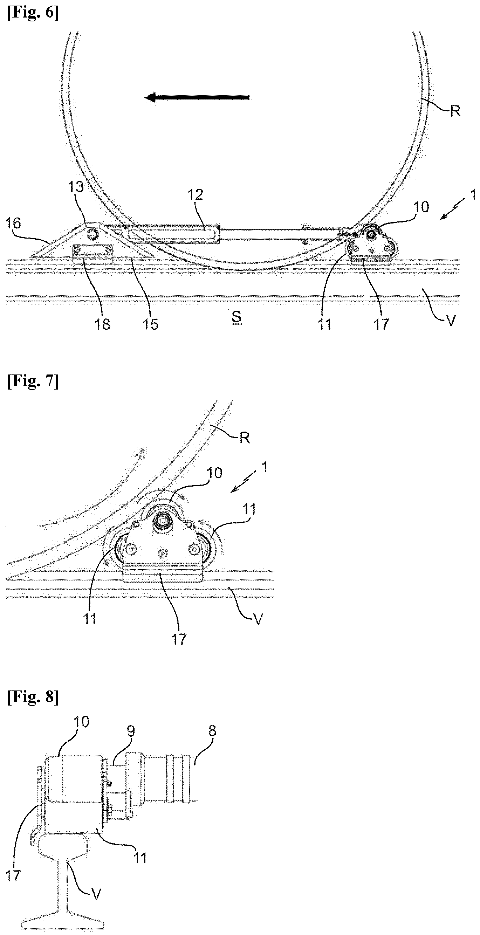

Selon le mode de réalisation représenté sur les figures, le dispositif de déplacement 1 comporte au moins les éléments suivants contenus au moins en partie dans le chariot 2 :
- un motoréducteur 8 dont l'axe de rotation de son arbre 9 est horizontal et est parallèle, et de préférence appartient, au plan sagittal du dispositif de déplacement 1, ledit motoréducteur 8 étant orienté pour que son arbre 9 s'étendent au-delà de la face avant du chariot 2,
- un rouleau d'entrainement 10 fixé sur l'extrémité libre de l'arbre 9 du motoréducteur 8 et donc entrainé en rotation par ce dernier, ledit rouleau d'entraînement 10 étant agencé pour venir en appui contre une des roues R de la charge (Cf. figure 7) à déplacer, et
- deux rouleaux d'appui 11 agencés pour venir en appui sur un des rails V de la voie ferrée recevant ladite roue R de la charge à déplacer et configurés pour être entraînés en rotation par adhérence par ledit rouleau d'entrainement 10.

Pour le dernier point, lesdits rouleaux d'appui 11 sont pivotant autour d'axes horizontaux, coplanaires et parallèles à l'axe de rotation de l'arbre 9 du motoréducteur 8 et disposés de part et d'autre dudit rouleau d'entrainement 10 et plus bas que ce dernier de sorte que, lorsque ledit rouleau d'entrainement 10 tourne, il entraîne avec lui en rotation par adhérence les deux rouleaux d'appui 11.

Le dispositif de déplacement 1 comporte en outre :
- un bras 12 solidaire par l'une de ses extrémités à l'arbre 9 du motoréducteur 8 et s'étendant horizontalement et perpendiculairement à l'axe de rotation dudit arbre 9, et
- un patin de freinage 13 solidaire de l'extrémité libre dudit bras 12 et agencé pour, d'une part, être disposé à proximité ladite roue R de la charge (Cf. figure 6) à déplacer du côté opposé et, d'autre part, venir en appui sur le rail V de la voie ferrée recevant ladite roue R.

Il va de soi que le dispositif de déplacement 1 pourra ne comporter qu'un seul rouleau d'appui 11 sans sortir du cadre de la présente invention. Toutefois, on comprend bien que pour des raisons évidentes de stabilité, le dispositif de déplacement 1 comportera avantageusement deux rouleaux d'appui 11 disposés selon la configuration décrite précédemment.

Pour accroître l'adhérence, les rouleau d'entrainement 10 et rouleaux d'appui 11 sont recouverts chacun d'un revêtement polymère.

Pour permettre d'adapter la position du patin de freinage 13 à la dimension de ladite roue R de la charge à déplacer, le bras 12 est avantageusement réglable en longueur.

Par ailleurs, pour permettre une mise en place de l'ensemble rouleau d'entrainement 10 - rouleaux d'appui 11 du dispositif de déplacement 1 d'un côté ou de l'autre de la roue R de la charge à déplacer, le bras 12 est avantageusement monté pivotant sur l'arbre 9 du motoréducteur 8 autour de l'axe de rotation de ce dernier afin de positionner le patin de freinage 13 d'un côté ou de l'autre dudit ensemble rouleau d'entrainement 10 - rouleaux d'appui 11. Dans cette hypothèse, on comprend bien que le patin de freinage 13 sera monté pivotant à l'extrémité du bras 12 associée autour d'un axe de rotation parallèle à l'axe de rotation de l'arbre 9 du motoréducteur 8 afin de positionner correctement la face d'appui du patin de freinage 13 sur le rail V de la voie ferrée recevant ladite roue R.

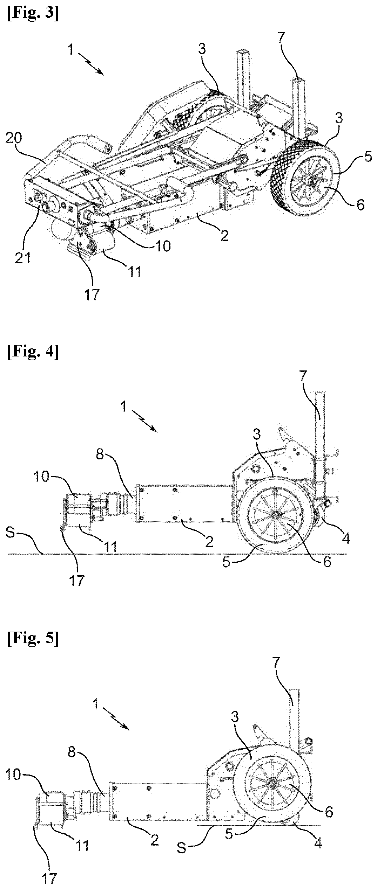

Afin d'avoir un dispositif de déplacement 1 compact lorsqu'il est non utilisé (Cf. figure 3), le bras 12 comporte une articulation 14 disposée du côté de l'extrémité solidaire de l'arbre 9 du motoréducteur 8 et permettant de faire passer ledit bras 12 d'une position "déplié" dans laquelle il est entièrement rectiligne à une position "replié" dans laquelle la portion du bras 12 allant de l'articulation 14 au patin de freinage 13 pivote pour former un angle compris entre 60° et 120°, avantageusement égal à 90°, avec la portion du bras 12 allant de l'articulation 14 à l'arbre 9 du motoréducteur 8.

Selon un mode de réalisation avantageux, le patin de freinage 13 est un tronçon de cylindre de section transversale globalement triangulaire isocèle comportant une face inférieure 15 horizontale agencée pour reposer sur le rail V et deux faces inclinées 16 agencées pour recevoir la roue R de la charge. Pour favoriser l'adhérence notamment sur ledit rail V, le patin de freinage 13 est en élastomère.

En outre, pour faciliter le guidage du dispositif de déplacement 1 le long du rail V, l'ensemble rouleau d'entrainement 10 - rouleaux d'appui 11 et le patin de freinage 13 comportent chacun au moins une plaque de guidage 17,18 agencée pour venir en appui contre le bord dudit rail V. La plaque de guidage 17 est solidaire au moins des rouleaux d'appui 11 du côté opposé au motoréducteur 8 et s'étend du côté opposé au rouleau d'entrainement 10 au-delà desdits rouleaux d'appui 11. De même, la plaque de guidage 18 est solidaire du patin de freinage 13 du côté opposé au motoréducteur 8 et s'étend du côté opposé au faces inclinées 16 dudit patin de freinage 13 au-delà de la face inférieure 15 de ce dernier. La plaque de guidage 18 est avantageusement associée à une plaque de guidage escamotable 19 solidaire du patin de freinage 13 du côté du motoréducteur 8 et pouvant ou non s'étendre au-delà de la face inférieure 15 dudit patin de freinage 13.

Pour faciliter son utilisation, le dispositif de déplacement 1 comporte également un certain nombre d'équipements annexes. Ainsi, ce dernier comporte :
- un guidon 20 solidaire de la partie arrière du chariot 2 et réglable en hauteur et repliable pour une bonne ergonomie en toutes situations,
- un poste de pilotage 21 avantageusement solidaire dudit guidon 20 et muni de tous les éléments nécessaire à la commande du dispositif de déplacement 1 et permettant notamment de mettre en marche le motoréducteur 8, de choisir la direction de rotation de ce dernier, d'arrêter en d'urgence la rotation, et
- un élément de stockage d'énergie 22 du type batterie rechargeable pour alimenter notamment le motoréducteur 8.

Le dispositif de déplacement 1 peut également comporter un phare 23 solidaire du guidon 20 et permettant d'éclairer la zone d'utilisation dudit dispositif de déplacement 1.

En référence aux figures 6 à 8, avec cette configuration, pour déplacer une charge avec des roues R sur des rails V avec le dispositif de déplacement 1 selon l'invention, on procède de la manière décrite ci-après.

Tout d'abord, on déplace le dispositif de déplacement 1 à l'aide du guidon 20 pour positionner l'ensemble rouleau d'entrainement 10 - rouleaux d'appui 11 près de l'une des roues R en posant lesdits deux rouleaux d'appui 11 sur le rail V et le rouleau d'entrainement 10 à proximité de ladite roue R. En réglant la longueur et l'orientation du bras 12, on positionne le patin de freinage 13 près de la roue R du côté opposé audit ensemble rouleau d'entrainement 10 - rouleaux d'appui 11 de sorte que la face inférieure 15 horizontale dudit patin de freinage 13 soit posée sur le rail V et que l'une de ses faces inclinées 16 soit à proximité de la roue R.

On règle la position des deuxièmes roues 4, à l'aide du profilé 7 vertical, afin qu'elles soient en appui sur le sol S, puis on relève les premières roues 3 jusqu'à leur position "haute".

Ensuite, on met en marche le motoréducteur 8 à l'aide du poste de pilotage 21 afin de faire tourner le rouleau d'entrainement 10, ce dernier entraîne avec lui en rotation par adhérence les deux rouleaux d'appui 11, ce qui provoque le déplacement le long du rail V de l'ensemble rouleau d'entrainement 10 - rouleaux d'appui 11 mais également des bras 12 et patin de freinage 13. Lorsque ledit ensemble rouleau d'entrainement 10 - rouleaux d'appui 11 arrive sous la roue R de la charge à déplacer, il se coince entre ladite roue R et le rail V, et le rouleau d'entrainement 10 transmet alors par adhérence le couple moteur à la roue R provoquant ainsi le déplacement de la charge roulant sur le rail V, cette dernière se déplaçant tant que le motoréducteur 8 fonctionne.

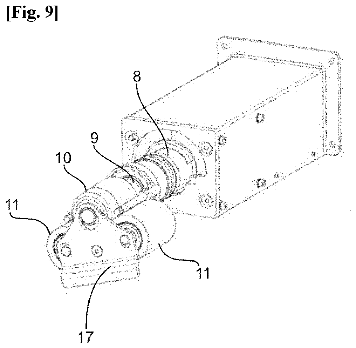

En référence à la figure 9, afin d'éviter tout à coup lorsque l'ensemble rouleau d'entrainement 10 - rouleaux d'appui 11 vient se coincer sous la roue R de la charge à déplacer, l'ensemble rouleau d'entrainement 10 - rouleaux d'appui 11 peut avantageusement pivoter autour de l'arbre 9 du motoréducteur 8.

Enfin, pour stopper la charge à un endroit voulu, on arrête le motoréducteur 8, l'ensemble rouleau d'entrainement 10 - rouleaux d'appui 11 s'arrête alors sur le rail V, la charge, elle, continue encore à avancer par inertie, jusqu'à ce que sa roue R vienne se caler sur le patin de freinage 13 et s'arrêter.

Le dispositif de déplacement 1 conforme à l'invention trouve une application particulière dans le déplacement de charge roulant sur des rails V d'une voie ferrée. Toutefois, il est évident que le dispositif de déplacement 1 peut être adapté et utilisé pour déplacer d'autres types de charges tels que, par exemple, des rouleaux de papier ou de tôles d'acier.

Enfin, il va de soi que les exemples de dispositif de déplacement 1 conforme à l'invention qui viennent d'être décrits ne sont que des illustrations particulières, en aucun cas limitatives de l'invention.

## Revendications

1. Dispositif de déplacement (1) d'une charge munie de roues et roulant sur des rails de voie ferrées, le dispositif de déplacement (1) comprenant au moins :
- un motoréducteur (8) dont l'axe de rotation de son arbre (9) est horizontal,
- un rouleau d'entrainement (10) fixé sur l'extrémité libre de l'arbre (9) du motoréducteur (8) et entrainé en rotation par ce dernier, ledit rouleau d'entrainement (10) étant agencé pour venir en appui contre une des roues (R) de la charge à déplacer,
- deux rouleaux d'appui (11) agencés pour venir en appui sur le rail (V) de la voie ferrée recevant ladite roue (R) de la charge à déplacer et configurés pour être entraînés en rotation par adhérence par ledit rouleau d'entrainement (10),
- un bras (12) solidaire par l'une de ses extrémités à l'arbre (9) du motoréducteur (8) et s'étendant horizontalement et perpendiculairement à l'axe de rotation dudit arbre (9), et
- un patin de freinage (13) solidaire de l'extrémité libre dudit bras (12) et agencé pour, d'une part, être disposé à proximité ladite roue (R) de la charge à déplacer du côté opposé audit rouleau d'entrainement (10)et, d'autre part, venir en appui sur ledit rail (V) de la voie ferrée recevant ladite roue (R),
- le bras (12) étant monté pivotant sur l'arbre (9) du motoréducteur (8) autour de l'axe de rotation de ce dernier et le patin de freinage (13) êtant monté pivotant à l'extrémité du bras (12) associée autour d'un axe de rotation parallèle à l'axe de rotation de l'arbre (9) du motoréducteur (8).

2. Dispositif de déplacement (1) selon la revendication 1 **caractérisé en ce que** le bras (12) est réglable en longueur.

3. Dispositif de déplacement (1) selon l'une quelconque des revendications 1 ou 2 **caractérisé en ce que** le bras (12) comporte une articulation (14) disposée du côté de l'extrémité solidaire de l'arbre (9) du motoréducteur (8) et permettant de faire passer ledit bras (12) d'une position "déplié" dans laquelle il est entièrement rectiligne à une position "replié".

4. Dispositif de déplacement (1) selon l'une quelconque des revendications 1 à 3 **caractérisé en ce que** le patin de freinage (13) est un tronçon de cylindre de section transversale globalement triangulaire isocèle comportant une face inférieure (15) horizontale agencée pour reposer sur le rail (V) et deux faces inclinées (16) agencées pour recevoir la roue (R) de la charge.

5. Dispositif de déplacement (1) selon l'une quelconque des revendications 1 à 4 **caractérisé en ce que** le patin de freinage (13) est en élastomère.

6. Dispositif de déplacement (1) selon l'une quelconque des revendications 4 ou 5 **caractérisé en ce qu'**il comporte une plaque de guidage (17) solidaire au moins des rouleaux d'appui (11) du côté opposé au motoréducteur (8) et s'étendant du côté opposé au rouleau d'entrainement (10) au-delà desdits rouleaux d'appui (11), et une plaque de guidage (18) solidaire du patin de freinage (13) du côté opposé au motoréducteur (8) et s'étendant du côté opposé au faces inclinées (16) dudit patin de freinage (13) au-delà de la face inférieure (15) de ce dernier.

7. Dispositif de déplacement (1) selon la revendication 6 **caractérisé en ce que** la plaque de guidage (18) solidaire du patin de freinage (13) est associée à une plaque de guidage escamotable (19) solidaire du patin de freinage (13) du côté du motoréducteur (8) et pouvant ou non s'étendre au-delà de la face inférieure (15) dudit patin de freinage (13).

8. Dispositif de déplacement (1) selon l'une quelconque des revendications 1 à 7 **caractérisé en ce qu'**il comporte un chariot (2) contenant au moins en partie le motoréducteur (8), le rouleau d'entrainement (10), les deux rouleaux d'appui (11), le bras (12) et le patin de freinage (13), ledit motoréducteur (8) étant orienté pour que son arbre (9) s'étendent au-delà de la face avant du chariot (2), ledit chariot (2) étant muni, d'une part, d'au moins une première roue (3) escamotable permettant de déplacer facilement sur un sol (S) ledit dispositif de déplacement (1) depuis son lieu de stockage jusqu'à son lieu d'utilisation et, d'autre part, d'au moins une deuxième roue (4) remplaçant la ou les première(s) roue(s) (3) pour déplacer ledit dispositif de déplacement (1), lorsque ce dernier est utilisé pour faire rouler une charge à déplacer.

9. Dispositif de déplacement (1) selon la revendication 8 **caractérisé en ce que** chaque deuxième roue (4) est réglable en hauteur et est du type roue "jockey".

10. Dispositif de déplacement (1) selon l'une quelconque des revendications 8 ou 9 **caractérisé en ce qu'**il comporte :
- un guidon (20) solidaire de la partie arrière du chariot (2) et réglable en hauteur et repliable pour une bonne ergonomie en toutes situations,
- un poste de pilotage (21) avantageusement solidaire dudit guidon (20) et muni de tous les éléments nécessaire à la commande du dispositif de déplacement (1), et
- un élément de stockage d'énergie (22) du type batterie rechargeable pour alimenter notamment le motoréducteur (8).

## Patentansprüche

1. Bewegungsvorrichtung (1) zum Bewegen (1) einer Last, die mit Rädern versehen ist und auf Eisenbahnschienen rollt, wobei die Bewegungsvorrichtung (1) mindestens Folgendes umfasst:
- einen Getriebemotor (8), dessen Drehachse seiner Welle (9) horizontal ist,
- eine Antriebsrolle (10), die am freien Ende der Welle (9) des Getriebemotors (8) befestigt ist und von diesem drehangetrieben wird, wobei die Antriebsrolle (10) so angeordnet ist, dass sie an einem der Räder (R) der zu bewegenden Last anliegt,
- zwei Stützrollen (11), die angeordnet sind, um auf der das Rad (R) der zu bewegenden Last aufnehmenden Schiene (V) des Eisenbahngleises zum Anliegen zu kommen, und dazu konfiguriert sind, durch Adhäsion durch die Antriebsrolle (10) drehangetrieben zu werden,
- einen Arm (12), der mit einem seiner Enden fest mit der Welle (9) des Getriebemotors (8) verbunden ist und sich horizontal und senkrecht zur Drehachse der Welle (9) erstreckt, und
- eine Bremsbacke (13), die fest mit dem freien Ende des Arms (12) verbunden und angeordnet ist, einerseits in der Nähe des Rads (R) der zu bewegenden Last auf der der Antriebsrolle (10) gegenüberliegenden Seite angeordnet zu sein und andererseits auf der das Rad (R) aufnehmenden Schiene (V) des Eisenbahngleises zum Anliegen zu kommen,
- wobei der Arm (12) schwenkbar auf der Welle (9) des Getriebemotors (8) um dessen Drehachse montiert ist und die Bremsbacke (13) am Ende des zugehörigen Arms (12) um eine Drehachse parallel zur Drehachse der Welle (9) des Getriebemotors (8) schwenkbar montiert ist.

2. Bewegungsvorrichtung (1) nach Anspruch 1, **dadurch gekennzeichnet, dass** der Arm (12) längenverstellbar ist.

3. Bewegungsvorrichtung (1) nach einem der Ansprüche 1 oder 2, **dadurch gekennzeichnet, dass** der Arm (12) ein Gelenk (14) umfasst, das auf der Seite des mit der Welle (9) des Getriebemotors (8) fest verbundenen Endes angeordnet ist und ermöglicht, dass der Arm (12) von einer "ausgeklappten" Position, in der er vollständig geradlinig ist, in eine "eingeklappte" Position wechselt.

4. Bewegungsvorrichtung (1) nach einem der Ansprüche 1 bis 3, **dadurch gekennzeichnet, dass** die Bremsbacke (13) ein Zylinderabschnitt mit einem im Allgemeinen gleichschenkligen dreieckigen Querschnitt ist, der eine horizontale Bodenfläche (15), die angeordnet ist, um auf der Schiene (V) zu ruhen, und zwei geneigte Flächen (16) umfasst, die angeordnet sind, um das Rad (R) der Last aufzunehmen.

5. Bewegungsvorrichtung (1) nach einem der Ansprüche 1 bis 4, **dadurch gekennzeichnet, dass** die Bremsbacke (13) aus Elastomer ist.

6. Bewegungsvorrichtung (1) nach einem der Ansprüche 4 oder 5, **dadurch gekennzeichnet, dass** sie auf der dem Getriebemotor (8) gegenüberliegenden Seite eine Führungsplatte (17), die mindestens mit den Stützrollen (11) fest verbunden ist und sich auf der der Antriebsrolle (10) gegenüberliegenden Seite über die Stützrollen (11) hinaus erstreckt, und eine Führungsplatte (18) umfasst, die auf der dem Getriebemotor (8) gegenüberliegenden Seite mit der Bremsbacke (13) fest verbunden ist und sich auf der den geneigten Flächen (16) der Bremsbacke (13) gegenüberliegenden Seite über deren Bodenfläche (15) hinaus erstreckt.

7. Bewegungsvorrichtung (1) nach Anspruch 6, **dadurch gekennzeichnet, dass** die mit der Bremsbacke (13) fest verbundene Führungsplatte (18) mit einer versenkbaren Führungsplatte (19) verbunden ist, die mit der Bremsbacke (13) auf der Seite des Getriebemotors (8) fest verbunden ist und sich über die Bodenfläche (15) der Bremsbacke (13) hinaus erstrecken kann oder nicht.

8. Bewegungsvorrichtung (1) nach einem der Ansprüche 1 bis 7, **dadurch gekennzeichnet, dass** sie einen Wagen (2) umfasst, der mindestens teilweise den Getriebemotor (8), die Antriebsrolle (10), die beiden Stützrollen (11), den Arm (12) und die Bremsbacke (13) enthält, wobei der Getriebemotor (8) derart ausgerichtet ist, dass seine Welle (9) sich über die vordere Fläche des Wagens (2) hinaus erstreckt, wobei der Wagen (2) einerseits mit mindestens einem ersten versenkbaren Rad (3), das es ermöglicht, die Bewegungsvorrichtung (1) auf einem Boden (S) einfach von ihrem Aufbewahrungsort zu ihrem Verwendungsort zu bewegen, und andererseits mindestens ein zweites Rad (4) versehen ist, das das erste Rad bzw. die ersten Räder (3) ersetzt, um die Bewegungsvorrichtung (1) zu bewegen, wenn letztere verwendet wird, um eine zu bewegende Last zu rollen.

9. Bewegungsvorrichtung (1) nach Anspruch 8, **dadurch gekennzeichnet, dass** jedes zweite Rad (4) höhenverstellbar und vom Typ "Stützrad" ist.

10. Bewegungsvorrichtung (1) nach einem der Ansprüche 8 oder 9, **dadurch gekennzeichnet, dass** sie Folgendes umfasst:
- einen Lenker (20), der fest mit dem hinteren Teil des Wagens (2) verbunden und höhenverstellbar und einklappbar ist, um in jeder Situation eine gute Ergonomie zu gewährleisten,
- einen Steuerstand (21), der vorteilhafterweise fest mit dem Lenker (20) verbunden und mit allen Elementen versehen ist, die zur Steuerung der Bewegungsvorrichtung (1) erforderlich sind, und
- ein Energiespeicherelement (22) vom Typ einer wiederaufladbaren Batterie, um insbesondere den Getriebemotor (8) mit Strom zu versorgen.

## Claims

1. A movement device (1) for moving a load provided with wheels and rolling on railway tracks, the movement device (1) comprising at least:
- a geared motor (8) whose shaft (9) has a horizontal axis of rotation,
- a drive roller (10) attached to the free end of the shaft (9) of the geared motor (8) and rotated thereby, said drive roller (10) being arranged to come to bear against one of the wheels (R) of the load to be moved, and
- two support rollers (11) arranged to come to bear against the rail (V) of the railway track receiving said wheel (R) of the load to be moved and configured to be rotated by adhesion by said drive roller (10),
- an arm (12) rigidly connected at one end thereof to the shaft (9) of the geared motor (8) and extending horizontally and perpendicularly to the axis of rotation of said shaft (9), and
- a brake shoe (13) rigidly connected to the free end of said arm (12) and arranged, on the one hand, so as to be disposed in the vicinity of said wheel (R) of the load to be moved on the side opposite to said drive roller (10) and, on the other hand, so as to come to bear against said rail (V) of the railway track receiving said wheel (R),
- the arm (12) being mounted such that it pivots on the shaft (9) of the geared motor (8) about the axis of rotation thereof, and the brake shoe (13) being mounted such that it pivots at the end of the associated arm (12) about an axis of rotation parallel to the axis of rotation of the shaft (9) of the geared motor (8).

2. The movement device (1) according to claim 1, **characterised in that** the length of the arm (12) can be adjusted.

3. The movement device (1) according to any one of claims 1 or 2, **characterised in that** the arm (12) includes a hinged joint (14) disposed on the same side as the end rigidly connected to the shaft (9) of the geared motor (8) and allowing said arm (12) to be moved from an "unfolded" position, wherein it is completely rectilinear, into a "folded" position.

4. The movement device (1) according to any one of claims 1 to 3, **characterised in that** the brake shoe (13) is a section of cylinder whose cross-section has the overall shape of an isosceles triangle, including a horizontal bottom face (15) arranged to rest on the rail (V) and two inclined faces (16) arranged to receive the wheel (R) of the load.

5. The movement device (1) according to any one of claims 1 to 4, **characterised in that** the brake shoe (13) is made of elastomer.

6. The movement device (1) according to any one of claims 4 or 5, **characterised in that** it includes a guide plate (17) rigidly connected to at least the support rollers (11) on the side opposite to the geared motor (8) and extending beyond said support rollers (11), on the side opposite to the drive roller (10), and a guide plate (18) rigidly connected to the brake shoe (13) on the side opposite to the geared motor (8) and extending beyond the bottom face (15) of said brake shoe (13), on the side opposite to the inclined faces (16) thereof.

7. The movement device (1) according to claim 6, **characterised in that** the guide plate (18) rigidly connected to the brake shoe (13) is associated with a retractable guide plate (19) rigidly connected to the brake shoe (13) on the geared motor (8) side and may or may not extend beyond the bottom face (15) of said brake shoe (13).

8. The movement device (1) according to any one of claims 1 to 7, **characterised in that** it includes a carriage (2) containing, at least in part, the geared motor (8), the drive roller (10), the two support rollers (11), the arm (12) and the brake shoe (13), said geared motor (8) being oriented so that the shaft (9) thereof extends beyond the front face of the carriage (2), said carriage (2) being provided, on the one hand, with at least a first retractable wheel (3) allowing said movement device (1) to be easily moved on a ground (S) from the place of storage thereof to the place of use thereof and, on the other hand, at least a second wheel (4) replacing the one or more first wheels (3) to move said movement device (1) when the latter is used to roll a load to be moved.

9. The movement device (1) according to claim 8, **characterised in that** each second wheel (4) is height-adjustable and is of the "jockey" wheel type.

10. The movement device (1) according to any one of claims 8 or 9, **characterised in that** it includes:
- a handlebar (20) rigidly connected to the rear part of the carriage (2), adjustable in height and capable of being folded in order to remain ergonomic in all situations,
- a control station (21), advantageously rigidly connected to said handlebar (20) and provided with all elements required to control the movement device (1), and
- an energy storage element (22) of the rechargeable battery type to power the geared motor (8) in particular.
